# EUROPÄISCHE PATENTSCHRIFT

(11) **EP 3 139 073 B1**
(45) Veröffentlichungstag und Bekanntmachung des Hinweises auf die Patenterteilung: **15.08.2018**
(21) Anmeldenummer: 16186110.9
(22) Anmeldetag: 29.08.2016
(51) Int. Cl.: F16K 5/06

(54) **KUGELHAHN**
BALL VALVE
ROBINET A BOISSEAU SPHERIQUE

(30) Priorität: 03.09.2015 DE 202015006243 U
(43) Veröffentlichungstag der Anmeldung: 08.03.2017
(73) Patentinhaber: Gebr. Kemper GmbH + Co. KG Metallwerke, 57462 Olpe (DE)
(72) Erfinder: Tinkloh, Thomas, 57462 Olpe (DE)
(74) Vertreter: Grünecker Patent- und Rechtsanwälte PartG mbB

(56) Entgegenhaltungen:
- EP-A1- 0 242 927
- DE-A1- 2 917 200
- DE-A1-102007 024 623
- DE-C1- 3 724 100

## Beschreibung

Die Erfindung betrifft eine Kugel mit einer Wandung zur Absperrung mindestens eines Einbauraumes eines Kugelhahns, wobei die Kugel eine Hohlkugel ist und die Wandung mindestens zwei Kugelöffnungen aufweist zur Ausbildung eines Durchlasskanals zwischen den zwei Kugelöffnungen, wobei mindestens eine Außenseite der Hohlkugel aus einem Thermoplast gebildet ist. Eine solche Kugel ist aus US 2015/0090916 A1 oder US 2005/0145817 A1 bekannt.

Die Erfindung betrifft weiterhin einen Kugelhahn mit einem mindestens eine Zulauföffnung und eine Ablauföffnung aufweisenden Gehäuse mit einer in dem Gehäuse angeordneten, zwischen einer Offenstellung und Schließstellung in dem Gehäuse verdrehbaren Kugel, welche mindestens einen Durchlasskanal aufweist, der in der Offenstellung der Kugel ein Medium zwischen der Zulauföffnung und der Ablauföffnung durchlässt und in der Schließstellung das Medium nicht durchlässt, wobei die Kugel mit einer Betätigungsspindel in die Offenstellung oder Schließstellung verschwenkt wird.

Kugelhähne und Kugeln für Kugelhähne sind in verschiedenen konstruktiven Ausgestaltungen bekannt. So zeigt DE 202 04 546 U1 einen Kugelhahn mit einer Konstruktion zur Durchströmung eines Totraums zwischen Absperrkugel und Kugelhahngehäuse. DE 202 11 356 U1 beschreibt einen Drei-Wege-Kugelhahn mit einer Kugel.

Die Kugeln von Kugelhähnen werden meist mit einem Kern aus Messing, Rotguss oder Edelstahl, mit mindestens einem meist zylindrischen Durchlasskanal, der als Gussteil, Schmiedeteil oder vollständig oder teilweise durch Zerspanung hergestelltes Bauteil ausgeführt ist. Jedoch steigt mit steigender Abmessung des Kugelhahns und des Kugelkerns das Gewicht der Kugel an, insbesondere im Vergleich zum Gehäusegewicht. Aufgrund des damit steigenden Trägheitsmoments nimmt die Trägheit der Kugel gegenüber Änderungen in der Drehgeschwindigkeit zu. Dies ist insbesondere bei schnellen Schaltvorgängen problematisch, bei denen die Kugel aus einer ruhenden Position heraus durch Drehung um die eigene Achse schnell in eine zweite Position verdreht und dazu kurzfristig beschleunigt und wieder abgebremst werden muss. Die DE 20 2007 006 205 U1 begegnet diesem Problem damit, dass die Kugel als Hohlkugel mit metallischer Außenwandung ausgebildet ist, welche auf der Innenseite mit einem Thermoplast ausgekleidet ist.

Die DE 10 2007 024 623 A1 offenbart eine Kugel für einen Kugelhahn mit einem Tragelement aus einem wärmefesten technischen Hochleistungskunststoff, wie beispielsweise glasfaserverstärktem Polyamid. Das Tragelement ist umgeben von einer Deckschicht, die aus Kunststoff wie beispielsweise Fluorkunststoffen, Polyäthylen, Polyoxymethylen (POM) oder Elastomer besteht.

Weiterhin ergibt sich zwischen der Dichtung des Durchlasskanals und der Kugel ein hoher Verschleiß. Dieser hängt stark von der verwendeten Materialpaarung ab. Die Dichtungen des Durchlasskanals bestehen meist aus einem Elastomer, wie EPDM, oder aus einem Thermoplast wie PTFE.

Es besteht daher das ständige Bedürfnis eine Kugel für einen Kugelhahn mit einem verringerten Gewicht und einen Kugelhahn mit einer längeren Lebensdauer zur Verfügung zu stellen.

Der Erfindung liegt daher die Aufgabe zugrunde, eine Kugel und einen Kugelhahn bereitzustellen, bei dem das Gewicht reduziert und der Verschleiß der Dichtung verringert werden kann, um eine erhöhte Lebensdauer des Kugelhahns zu ermöglichen.

Zur Lösung der obigen Aufgabe wird mit der vorliegenden Erfindung eine Kugel mit den Merkmalen des Anspruchs 1 und ein Kugelhahn mit den Merkmalen des Anspruchs 2 angegeben.

Bevorzugte Ausgestaltungen der Erfindung sind in den Unteransprüchen angegeben, die jeweils einzeln oder in Kombination einen Aspekt der Erfindung darstellen können.

Die erfindungsgemäße Kugel und der erfindungsgemäße Kugelhahn unterscheiden sich vom gattungsbildenden Stand der Technik dadurch, dass das Kernmaterial ein Metall, vorzugsweise Messing, Rotguss oder Edelstahl, ist. Die Kugel kann insbesondere an ihrer Außenwand Mittel zur Drehmomentübertragung, wie beispielsweise eine Quer- oder Keilnut aufweisen, die zur drehmomentstarren Kopplung mit einer Betätigungsspindel zum Verschwenken der Kugel in eine Offenstellung oder Schließstellung verwendet werden. Als Hohlkugel wird dabei üblicherweise eine Form mit einer im Wesentlichen kugelförmigen äußeren Oberfläche angesehen. Die Kugel des Kugelhahnes ist regelmäßig um eine Verschwenkachse schwenkbar gelagert. Flächen, die in Achsrichtung die Kugel oberseitig und unterseitig begrenzen können eine andere als eine kugelsegmentförmige Gestalt haben, insbesondere eben mit einer Erstreckung im Wesentlichen rechtwinklig zu der Schwenkachse verwirklicht sein. Die Hohlkugel bildet innen den Durchlasskanal aus, der im Grunde jede beliebige geometrische Ausgestaltung haben kann. Der Durchlasskanal kann als zylindrische Bohrung ausgebildet sein. Bei einem Dreiwegeventil kann von einer solchen durchgehenden Bohrung eine dritte Bohrung im Wesentlichen rechtwinklig abgehen.

Kugelhähne werden an Medium durchflossene Leitungen angeschlossen und dienen dazu, den Durchfluss des Mediums, beispielsweise ein Gas oder ein Fluid, wie eine Flüssigkeit, zu dosieren, freizugeben oder zu sperren. Dazu besitzt der Kugelhahn ein Gehäuse, mit einer Zulauföffnung und einer Ablauföffnung, und einem zwischen der Zulauföffnung und der Ablauföffnung angeordneten Einbauraum. Die in dem Einbauraum des Kugelhahns angeordnete Kugel weist zumindest einen Durchlasskanal auf, durch den das Medium vom Zulaufkanal in den Ablaufkanal strömen kann.

Die Erfindung ermöglicht es durch eine geschickte Wahl des Materials für die Kugel das Gesamtgewicht der Kugel im Vergleich zu einer Ausführung gemäß dem Stand der Technik zu reduzieren. Weiterhin kann durch die Verwendung eines Polyoxymethylen, Polyamid oder Polyurethan als Wandung an einer Außenseite der Kugel ein Verschleiß der Dichtungen zwischen dem Durchlaufkanal des Gehäuses und der Kugel reduziert werden, so dass dadurch eine erhöhte Lebensdauer des Kugelhahns ermöglicht werden kann.

Die Thermoplasten Polyoxymethylen, Polyamid oder Polyurethan weisen gute Materialeigenschaften, wie eine hohe Abriebfestigkeit, auf. Weiterhin kann durch die Verwendung der oben genannten Materialien Reibung zwischen der Dichtung des Gehäuses und der Kugel reduziert werden, so dass eine verschleißarme Verwendung der Kugel in dem Kugelhahn, und ein verschleißarmer Abrieb zwischen der Dichtung des Gehäuses und der Kugel ermöglicht werden kann. Erfindungsgemäß ist die Hohlkugel durch ein Kernmaterial ausgebildet, wobei mindestens eine Außenseite des Kernmaterials von dem Thermoplast bedeckt ist. Dabei kann das Kernmaterial eine höhere Festigkeit als der Thermoplast aufweisen und als Stützgerüst für die Kugel dienen. Auf diese Weise kann die Festigkeit der Kugel erhöht werden. Erfindungsgemäß ist das Kernmaterial ein Metall, vorzugsweise Messing, Rotguss oder Edelstahl. Dadurch kann die Kugel die für die Funktion und konstruktive Ausgestaltung des Kugelhahns wichtigen äußeren Eigenschaften einer sonst aus dem Stand der Technik bekannten Kugel, wie Härte oder Verschleißfestigkeit, erhalten bleiben.

Die Erfindung betrifft weiterhin einen Kugelhahn umfassend ein Gehäuse mit einer Zulauföffnung und einer Ablauföffnung, und einem zwischen der Zulauföffnung und der Ablauföffnung angeordneten Einbauraum, und eine in dem Einbauraum angeordnete Kugel zum Verschließen oder Öffnen des Einbauraumes, wobei die Kugel mit einer drehbaren Betätigungsspindel zum Verschließen oder Öffnen des Einbauraumes verbunden ist, wobei die Kugel, wie vorstehend ausgebildet oder weitergebildet ist.

Dadurch kann ein Kugelhahn bereit gestellt werden, bei dem durch eine Kugel, die wie vorstehend ausgebildet oder weitergebildet sein kann, das Gewicht reduziert und eine erhöhte Lebensdauer des Kugelhahns ermöglicht werden kann.

Vorzugsweise ist zwischen der Kugel und dem Gehäuse eine Dichtung vorgesehen. Dazu weist das Gehäuse bevorzugt jeweils einen Übergang von dem Einbauraum zur Zulauföffnung und von dem Einbauraum zur Ablauföffnung auf, wobei an der zum Einbauraum weisenden Seite der Übergänge jeweils eine Dichtung angeordnet ist. Dabei können zwei Dichtungen an gegenüberliegenden Seiten die Kugel kontaktieren, um den Einbauraum gegenüber dem Medium abzudichten und in der Offenstellung der Kugel nur einen Durchfluss durch den Durchlaufkanal der Kugel zu ermöglichen. Auf diese Weise können Leckagen in den Zwischenraum zwischen der Kugel und dem Durchlaufkanal des Gehäuses vermieden werden. Der Übergang zwischen dem Einbauraum ist dabei vorzugsweise so ausgebildet, dass der Einbauraum absatzfrei in die Dichtung übergeht. Der Übergang verspringt dementsprechend üblicherweise nach außen zu einem die Kugel aufweisenden Durchlaufraum, der den Aufnahmeraum für die Kugel ausbildet.

Vorzugsweise ist die Dichtung, d.h. das mit der Kugeloberfläche zusammenwirkende Teil der Dichtung aus einem Polyurethan, Polyethylen oder aus einem Polytetrafluorethlyen hergestellt. Dadurch kann Reibung zwischen der Dichtung und einer Kugel mit einer Außenseite aus einem Thermoplast verringert werden, wodurch die Lebensdauer des Kugelhahns erhöht werden kann. Dieses Teil aus Polyurethan, Polyethylen oder Polytetrafluorethlyen kann durch einen Stützring hinterlegt sein, der dem Dichtring die notwendige Festigkeit gibt und der Montage des Dichtringes in dem Gehäuse des Kugelhahnes dient. In bevorzugter Weise sind die Dichtung und die Außenseite der Kugel aus unterschiedlichen Thermoplasten gebildet.

Weitere Einzelheiten und Vorteile der vorliegenden Erfindung ergeben sich aus der nachfolgenden Beschreibung eines Ausführungsbeispiels in Verbindung mit der Zeichnung. In dieser zeigt:

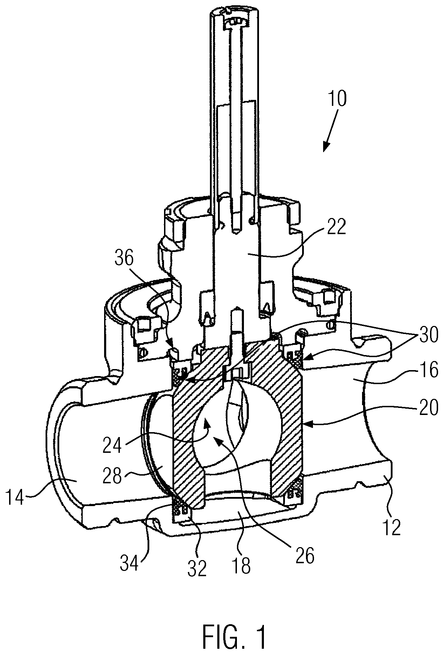

Fig. 1 eine Schnittansicht einer Ausführungsform eines Kugelhahns.

Fig. 1 zeigt eine Schnittansicht eines Kugelhahns 10. Der Kugelhahn 10 umfasst ein Gehäuse 12 mit einer Zulauföffnung 14 und einer Ablauföffnung 16. Zwischen der Zulauföffnung 14 und der Ablauföffnung 16 ist ein Einbauraum 18 angeordnet. In dem Einbauraum 18 ist eine Kugel 20 zum Verschließen oder Öffnen des Einbauraumes 18 angeordnet. Die Kugel 20 ist mit einer verschwenkbaren Betätigungsspindel 22 zum Betätigen der Kugel für das Verschließen oder Öffnen des Kugelhahnes 10 verbunden.

Die Kugel 20 des Kugelhahns 10 ist als eine Hohlkugel mit zwei Kugelöffnungen 24 eines Durchlasskanals 26 und zwei sich parallel zu dem Durchlasskanal 26 erstreckenden und die Kugel 20 außenseitig begrenzenden Wandungen 28 ausgebildet. Zwischen den zwei Kugelöffnungen 24 wird ein Durchlasskanal ausgebildet. In Fig. 1 ist aufgrund der Schnittansicht nur eine Kugelöffnung 24 dargestellt. Jedoch ist die nicht dargestellte Kugelöffnung gegenüber der dargestellten Kugelöffnung 24 angeordnet. In diesem nicht unter die Erfindung fallenden Ausführungsbeispiel ist die Kugel 20 als Vollmaterial aus Polyoxymethylen hergestellt.

Das Gehäuse 12 weist jeweils einen Übergang von dem Einbauraum 18 zur Zulauföffnung 14 und von dem Einbauraum 18 zur Ablauföffnung 16 auf. An den zum Einbauraum 18 weisenden Seiten der Übergänge ist jeweils eine Dichtung 30 angeordnet. Wie ersichtlich sind die Dichtungen 30 zweiteilig ausgebildet mit einem äußeren Stützring 32, der mit einem Abdichtring 34 aus Polyurethan zumindest formschlüssig verbunden ist und diesen hält. Der Stützring 32 wird außenumfänglich von dem einteiligen Gehäuse 12 einerseits und andererseits einem damit verschraubten Ventiloberteil 36, der die Betätigungsspindel 22 drehbar lagert, gehalten. In axialer Richtung, d.h. in Richtung der Zu- und Ablauföffnungen 14, 16 liegt der Stützring 32 an einer Ringschulter an, die den Einbauraum 18 begrenzt und zu dem Ablaufkanal 16 führt.

Die Kugel 20 hat in Verlängerung der Betätigungsspindel 22 eine axiale Bohrung, die sich zu dem Einbauraum 18 hin öffnet. Durch diese Maßnahme wird sichergestellt, dass zumindest beim Öffnen der Armatur ein Kugelhinterraum, der in der in Figur 1 gezeigten Verschlussstellung der Kugel 20 in Erstreckungsrichtung des Durchlasskanals 26 zwischen der Kugel 20 und dem Gehäuse 12 ausgespart ist, mit dem fließenden Medium verbunden ist. In der geöffneten Stellung kommuniziert die in Verlängerung der Betätigungspindel 22 vorgesehene axiale Bohrung mit dem Einbauraum 18 und damit auch dem Kugelhinterraum. Hierin gefangenes Fluid wird somit ausgetauscht.

Die Dichtungen 30, respektive der Abdichtring 34 der jeweiligen Dichtung 30 ist in Kontakt mit der Kugel 20, um den Einbauraum 18 gegenüber dem Medium abzudichten, so dass das Medium nur in der Offenstellung der Kugel 20 durch den Durchlasskanal strömen kann. Die Abdichtringe 34 sind aus Polyurethan hergestellt. Durch eine Kugeloberfläche aus Polyoxymethylen und einem Abdichtmaterial aus Polyurethan wird eine verschleißarme Werkstoffpaarung zur Verfügung gestellt. Die Reibung zwischen den Dichtungen 30 und der Kugel 20 wird durch die Materialauswahl verringert. Dadurch wird die Haltbarkeit der Dichtungen 30 erhöht, wodurch auch die Lebensdauer des Kugelhahns 20 erhöht wird.

### Bezugszeichenliste

- 10: Kugelhahn
- 12: Gehäuse
- 14: Zulauföffnung
- 16: Ablauföffnung
- 18: Einbauraum
- 20: Kugel
- 22: Betätigungsspindel
- 24: Kugelöffnung
- 26: Durchlasskanal
- 28: Wandung
- 30: Dichtung
- 32: Stützring
- 34: Abdichtring
- 36: Ventiloberteil

## Patentansprüche

1. Kugel (20) mit einer Wandung (28) zur Absperrung mindestens eines Einbauraumes (18) eines Kugelhahns (10), wobei die Kugel eine Hohlkugel ist, die Wandung (28) mindestens zwei Kugelöffnungen (24) aufweist zur Ausbildung eines Durchlasskanals (26) zwischen den zwei Kugelöffnungen (24), wobei die Hohlkugel durch ein Kernmaterial ausgebildet ist und mindestens eine Außenseite des Kernmaterials mit Polyoxymethylen, Polyamid oder Polyurethan als Thermoplast bedeckt ist, **dadurch gekennzeichnet, dass** das Kernmaterial ein Metall, vorzugsweise Messing, Rotguss oder Edelstahl, ist.

2. Kugelhahn, umfassend:
ein Gehäuse (12) mit einer Zulauföffnung (14) und einer Ablauföffnung (16), und einem zwischen der Zulauföffnung (14) und der Ablauföffnung (16) angeordneten Einbauraum (18), und
eine in dem Einbauraum (18) angeordnete Kugel (20) zum Verschließen oder Öffnen des Einbauraumes (18), wobei die Kugel (20) mit einer drehbaren Betätigungsspindel (22) zum Verschließen oder Öffnen des Einbauraumes (18) verbunden ist,
**dadurch gekennzeichnet, dass**
die Kugel (20) nach Anspruch 1 ausgebildet ist.

3. Kugelhahn nach Anspruch 2, **dadurch gekennzeichnet, dass** zwischen der Kugel (20) und der Zulauföffnung (14) bzw. der Ablauföffnung (16) eine Dichtung (30) angeordnet ist.

4. Kugelhahn nach Anspruch 3, **dadurch gekennzeichnet, dass** die Dichtung (30) einen aus Polyurethan, Polyethylen oder Polytetrafluorethlyen hergestellten und an der Kugel (20) anliegenden Dichtkörper (34) aufweist.

5. Kugelhahn nach Anspruch 3 oder 4, **dadurch gekennzeichnet, dass** die Dichtung (30) zumindest zweiteilig mit einem äußeren Stützring (32) und einem inneren, mit der Kugel (20) zusammenwirkenden Abdichtring (34) ausgebildet ist.

## Claims

1. Ball (20) comprising a wall (28) for shutting off at least one installation space (18) of a ball valve (10), the ball being a hollow ball, the wall (28) comprising at least two ball openings (24) so as to form a through channel (26) between the two ball openings (24),
the hollow ball being formed by a core material
and at least one outer face of the core material being coated with polyoxymethylene, polyamide or polyurethane as a thermoplastic polymer, **characterised in that** the core material is a metal, preferably brass, red brass or stainless steel.

2. Ball valve comprising:
a housing (12) having an inlet opening (14) and an outlet opening (16), and an installation space (18) arranged between the inlet opening (14) and the outlet opening (16), and
a ball (20) arranged in the installation space (18) for closing or opening the installation space (18), the ball (20) being connected to a rotatable actuation spindle (22) in order to close or open the installation space (18),
**characterised in that**
the ball (20) is designed according to claim 1.

3. Ball valve according to claim 2, **characterised in that** a seal (30) is arranged between the ball (20) and the inlet opening (14) or outlet opening (16).

4. Ball valve according to claim 3, **characterised in that** the seal (30) comprises a sealing body (34) that is made of polyurethane, polyethylene or polytetrafluoroethylene and abuts the ball (20).

5. Ball valve according to either claim 3 or claim 4, **characterised in that** the seal (30) is formed of at least two parts, comprising an outer bearing ring (32) and an inner sealing ring (34) that cooperates with the ball (20).

## Revendications

1. Boisseau sphérique (20) comprenant une paroi (28) pour assurer l'obstruction d'au moins un logement de montage (18) d'un robinet à boisseau sphérique (10), le boisseau sphérique étant un boisseau sphérique creux, la paroi (28) présentant au moins deux ouvertures de boisseau (24) pour former un canal de passage (26) entre les deux ouvertures de boisseau (24), le boisseau sphérique creux étant réalisé en un matériau de coeur, et au moins un côté extérieur du matériau de coeur étant revêtu de polyoxyméthylène, de polyamide ou de polyuréthanne en guise de matière thermoplastique, **caractérisé en ce que** le matériau de coeur est un métal, de préférence du laiton, du laiton rouge ou un acier surfin inoxydable.

2. Robinet à boisseau sphérique, comprenant :
un corps de robinet (12) avec une ouverture d'entrée d'écoulement (14) et une ouverture de sortie d'écoulement (16), et un logement de montage (18) agencé entre l'ouverture d'entrée d'écoulement (14) et l'ouverture de sortie d'écoulement (16), et
un boisseau sphérique (20) agencé dans le logement de montage (18) pour fermer ou ouvrir le logement de montage (18), le boisseau sphérique (20) étant relié à une tige d'actionnement (22) rotative, pour fermer ou ouvrir le logement de montage (18),
**caractérisé en ce que** le boisseau sphérique (20) est configuré selon la revendication 1.

3. Robinet à boisseau sphérique selon la revendication 2, **caractérisé en ce qu'**un joint d'étanchéité (30) est agencé entre le boisseau sphérique (20) et l'ouverture d'entrée d'écoulement (14) ou respectivement l'ouverture de sortie d'écoulement (16).

4. Robinet à boisseau sphérique selon la revendication 3, **caractérisé en ce que** le joint d'étanchéité (30) comprend un corps d'étanchéité (34), qui est fabriqué en polyuréthanne, polyéthylène ou polytétrafluoroéthylène, et s'appuie sur le boisseau sphérique (20).

5. Robinet à boisseau sphérique selon la revendication 3 ou la revendication 4, **caractérisé en ce que** le joint d'étanchéité (30) est d'une configuration en au moins deux parties, avec un anneau de support extérieur (32) et un anneau d'étanchéité intérieur (34) interagissant avec le boisseau sphérique (20).
